# EUROPEAN PATENT APPLICATION

(11) **EP 1 992 457 A1**
(43) Date of publication of application: **19.11.2008**
(21) Application number: 08005152.7
(22) Date of filing: 19.03.2008
(51) Int. Cl.: B25J 19/00

(54) **Robot having arm in which umbilical member is accommodated**

(30) Priority: 19.03.2007 JP 2007071365
(71) Applicant: FANUC LTD, Minamitsuru-gun, Yamanashi 401-0597 (JP)
(72) Inventor: Inoue, Toshihiko, Minamitsuru-gun Yamanashi 401-0597 (JP); Nakayama, Kazutaka, Minamitsuru-gun Yamanashi 401-0597 (JP); Iwayama, Takatoshi, Minamitsuru-gun Yamanashi 401-0597 (JP); Uemura, Tokitaka, Minamitsuru-gun Yamanashi 401-0597 (JP)
(74) Representative: Thum, Bernhard

(57) **Abstract**

A robot including a forearm section (18) with a through passage (34), a wrist section (20) articulated on the forearm section, and an umbilical member (38) inserted through the through passage of the forearm section and provided along the wrist section. The robot includes a tool managing and relaying unit (46) mounted on the forearm section close to the through passage and provided with a connection part (44) to which the umbilical member is connected, and a mount mechanism (68) carrying the tool managing and relaying unit movably between a first position where the connection part is disposed adjacent to an opening of the through passage and a second position where the connection part is spaced from the opening of the through passage, and releasably securing the tool managing and relaying unit to the forearm section at the first position.

## Description

### BACKGROUND OF THE INVENTION

### 1. Field of the Invention

The present invention relates a robot having an arm in which an umbilical member is accommodated.

### 2. Description of the Related Art

When an industrial robot (hereinafter simply referred to as a "robot") performs processing work such as arc welding, laser processing, sealing, etc., or a handling work such as loading, unloading, bin picking, etc., it is required to supply energy such as electric power, laser beam, hydraulic fluid, etc., signals such as electrical signals, optical signals, etc., or a material such as wire, gas, sealant, etc., to a working tool (i.e., an end effector) such as a welding torch, a hand, etc., that is attached to a distal end of an arm structure (i.e., a manipulator) of the robot. The energy, signals, material, etc., are typically supplied by using a cable, a pipe, etc.

For example, in an arc welding robot, a cable or pipe for supplying welding current, welding wire, assist gas, etc., is provided in association with a welding torch (or a working tool) attached to the distal end of an arm. In a handling robot, a cable or pipe for supplying electric signals, hydraulic fluid, vacuum, etc., is provided in association with a hand (or a working tool) attached to the distal end of an arm. In this connection, a member such as a cable, a pipe, etc., that is used for supplying energy, signals, material, etc., to a working tool, is generally referred to as an "umbilical member".

In the robot of the type described above, a configuration in which the umbilical member is laid or provided inside the arm so as to inhibit a change in the position and orientation of the umbilical member, which may be caused by the movement of the arm, and thus to stabilize the supply of the energy, materials, etc., has been conventionally proposed. For example, Japanese Unexamined Patent Publication (Kokai) No. 2003-200376 (JP-A-2003-200376) discloses an arc welding robot having a 6-axis vertical articulated configuration, wherein a conduit cable (or an umbilical member) for supplying a welding wire, welding current, assist gas, etc., to a welding torch attached to the distal end of an arm, is introduced from a lateral side of a top arm (corresponding to a "forearm section" referred to in the present application) into a space inside the arm and laid therein. In summary, the arc welding robot includes a top arm having a laterally opening through passage, a wrist section having 3-degrees of freedom and articulated to the top arm, a conduit cable inserted through the through passage of the top arm and laid along a space inside the wrist section, and a wire feeding unit mounted on the top arm near the lateral opening of the through passage and provided with a connection part to which one end of the conduit cable is connected.

The wire feeding unit operates to feed the welding wire, which is supplied from a wire supply source outside the robot, to the welding torch through the conduit cable in a controlled manner. The wire feeding unit also acts as a relaying section for supplying the welding current and the assist gas, which are supplied respectively from a welding power supply and a gas supply source, both outside the robot, to the welding torch through a dedicated wiring and piping in the conduit cable. In this connection, a unit such as the above-described wire feeding unit, which is interposed between the umbilical member provided in the arm of the robot and a control unit or a supply source of energy, materials, etc., provided outside the robot, and acts to relay the transfer of signals or the supply of energy, materials, etc., relative to the working tool, is generally referred to as a "tool managing and relaying unit" in the present application.

In a robot having an arm structure in which an umbilical member is accommodated, such as the arc welding robot as set forth in JP-A-2003-200376, it is advantageous to reduce a gap defined between the tool managing and relaying unit and the arm structure as much as possible and dispose the tool managing and relaying unit in the neighborhood of a joint, in order to prevent interference between the tool managing and relaying unit and structures surrounding the robot, which may occur during movement of the arm, and reduce influence of inertia of the tool managing and relaying unit on the movement of the arm. On the other hand, the umbilical member laid or provided between the tool managing and relaying unit and the working tool at the distal end of the arm may be degraded or damaged due to bending or twisting caused during repeated arm movement, and therefore, it becomes necessary to periodically replace the umbilical member. Conventionally, when an umbilical member is replaced, the umbilical member is manually removed from the connection part of the tool managing and relaying unit. However, in a configuration where the gap between the tool managing and relaying unit and the arm structure is reduced as described above, it is difficult to maintain space between the tool managing and relaying unit and the arm structure sufficient to allow an operator to smoothly remove the umbilical member, and as a result, the umbilical member can not be replaced when necessary and it is therefore difficult to properly and safely manage the robot.

In this regard, in the arc welding robot of JP-A-2003-200376 in which the through passage of the top arm is opened at the lateral side of the arm and the conduit cable fed out of the wire feeding unit is introduced into the through passage from the lateral side of the arm, the connection part of the wire feeding unit, connected to the conduit cable, is exposed, and therefore, it was anticipated that the above-described removing operation could be smoothly performed. However, in this configuration, the center of gravity of the wire feeding unit deviates from a rotation center axis of the wrist section with respect to the top arm, and therefore, the arm structure may become unbalanced, and it is difficult to eliminate influence on the movement of the arm, caused by the inertia of the wire feeding unit or interference of the wire feeding unit with peripheral devices.

### SUMMARY OF THE INVENTION

It is an object of the present invention to provide a robot having an arm in which an umbilical member is accommodated, the robot having excellent reliability such as preventing interference between a tool managing and relaying unit and structures surrounding the robot from occurring during movement of the arm, reducing influence of inertia of the tool managing and relaying unit on the movement of the arm, and also allowing the umbilical member to be smoothly replaced and proper safety management of the robot to be performed.

To accomplish the above object, the present invention provides a robot comprising a forearm section provided with a through passage; a wrist section articulated on the forearm section; an umbilical member inserted through the through passage of the forearm section and provided along the wrist section; a tool managing and relaying unit mounted on the forearm section close to the through passage and provided with a connection part, the umbilical member being connected to the connection part; and a mount mechanism carrying the tool managing and relaying unit in a manner movable between a first position where the connection part is disposed adjacent to an opening of the through passage and a second position where the connection part is spaced from the opening of the through passage, and securing the tool managing and relaying unit to the forearm section in a releasable manner at the first position.

The mount mechanism may comprise a guide section guiding the tool managing and relaying unit between the first position and the second position, and a securing section cooperating with the guide section to releasably secure the tool managing and relaying unit at the first position.

The mount mechanism may also comprise an attachment member detachably attached to the tool managing and relaying unit; and the attachment member may be fitted to the forearm section movably between the first position and the second position.

When the tool managing and relaying unit is disposed at the first position, the connection part may be received inside the through passage of the forearm section.

The wrist section may comprise a first wrist element joined to the forearm section and rotatable about a first axis, a second wrist element joined to the first wrist element and rotatable about a second axis extending orthogonally to the first axis, and a third wrist element joined to the second wrist element and rotatable about a third axis extending orthogonally to the second axis; and a working tool, to which the umbilical member is connected, may be attached to the third wrist element.

### BRIEF DESCRIPTION OF THE DRAWINGS

The above and other objects, features and advantages of the present invention will become more apparent from the following description of the preferred embodiments with reference to the accompanying drawings, wherein:
Fig. 1 is a front view showing a major portion of a robot according to an embodiment of the present invention;
Figs. 2A and 2B are a plan view and a side view, respectively, of the robot major portion of Fig. 1;
Fig. 3 is an illustration schematically showing an example of an entire configuration of a robot system including the robot of Fig. 1;
Figs. 4A to 4C are illustrations showing an example of behavior or motion of an umbilical member shifted due to the movement of a wrist section in the robot of Fig. 1, at a reference orientation, an orientation after +90 degree rotation, and an orientation after -90 degree rotation, respectively;
Figs. 5A to 5C are illustrations showing another example of behavior or motion of an umbilical member shifted due to the movement of a wrist section in the robot of Fig. 1, at a reference orientation, an orientation after +90 degree rotation, and an orientation after -90 degree rotation, respectively;
Fig. 6 is a front view showing the robot major portion of Fig. 1 at a second position;
Figs. 7A and 7B are a plan view showing the robot major portion of Fig. 6 and a partial side view showing a major component extracted from the robot major portion;
Fig. 8 is an illustration showing a modification of a mount mechanism incorporated into the robot of Fig. 1;
Figs. 9A and 9B are illustrations showing another modification of a mount mechanism incorporated into the robot of Fig. 1, in a state where a tool managing and relaying unit is mounted on the robot and a state where the tool managing and relaying unit is removed from the robot, respectively;
Fig. 10 is an illustration showing yet another modification of a mount mechanism incorporated into the robot of Fig. 1;
Fig. 11 is an illustration schematically showing another example of an entire configuration of a robot system including the robot of Fig. 1;
Fig. 12 is an illustration showing an example of a specific configuration of a connection part of the tool managing and relaying unit mounted on the robot of Fig. 1;
Fig. 13 is an illustration showing another example of a specific configuration of a connection part of the tool managing and relaying unit mounted on the robot of Fig. 1; and
Fig. 14 is an illustration showing yet another example of a specific configuration of a connection part of the tool managing and relaying unit mounted on the robot of Fig. 1.

### DETAILED DESCRIPTION

The embodiments of the present invention are described below, in detail, with reference to the accompanying drawings. In the drawings, same or similar components are denoted by common reference numerals.

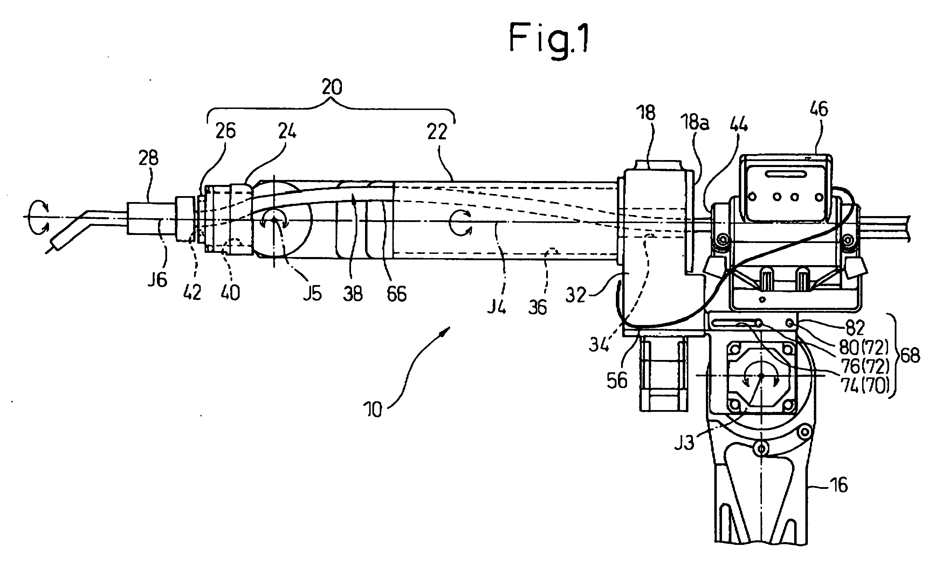

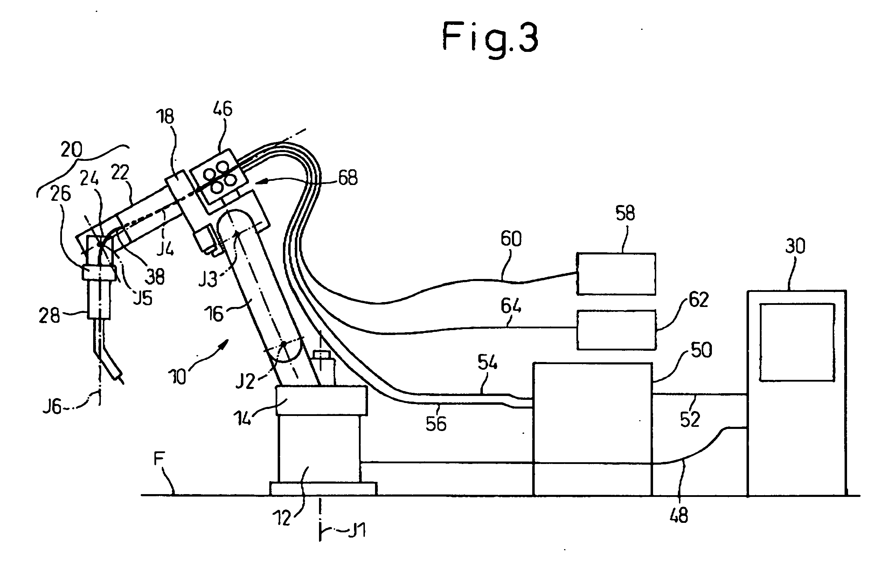

Referring to the drawings, Figs. 1 to 2B show a major portion of a robot 10 according to an embodiment of the present invention. Further, Fig. 3 schematically shows an example of an entire configuration of a robot system including the robot 10. The illustrated robot 10 has a mechanical configuration of a 6-axis vertical articulated robot, but the robot according to the present invention is not limited to this mechanical configuration. In the present application, the term "robot" refers to a mechanical section excluding a controller.

The robot 10 includes an arm structure (i.e., a manipulator) having 6-degrees of freedom and supported on a stationary base 12 fixedly installed on a floor surface F (Fig. 3). The arm structure includes a rotary post 14 joined to the stationary base 12 in a manner rotatable about a vertical first axis of arm J1 relative to the floor surface F, a first arm section (i.e., an upper arm section) 16 joined to the rotary post 14 in a manner rotatable (or swingable) about a horizontal second axis of arm J2 orthogonal to the arm first axis J1, a second arm section (i.e., a forearm section) 18 joined to the upper arm section 16 in a manner rotatable (or swingable) about a horizontal third axis of arm J3 parallel to the arm second axis J2, and a wrist section 20 joined to the forearm section 18 in a manner rotatable about a first axis of wrist J4 orthogonal to the arm third axis J3.

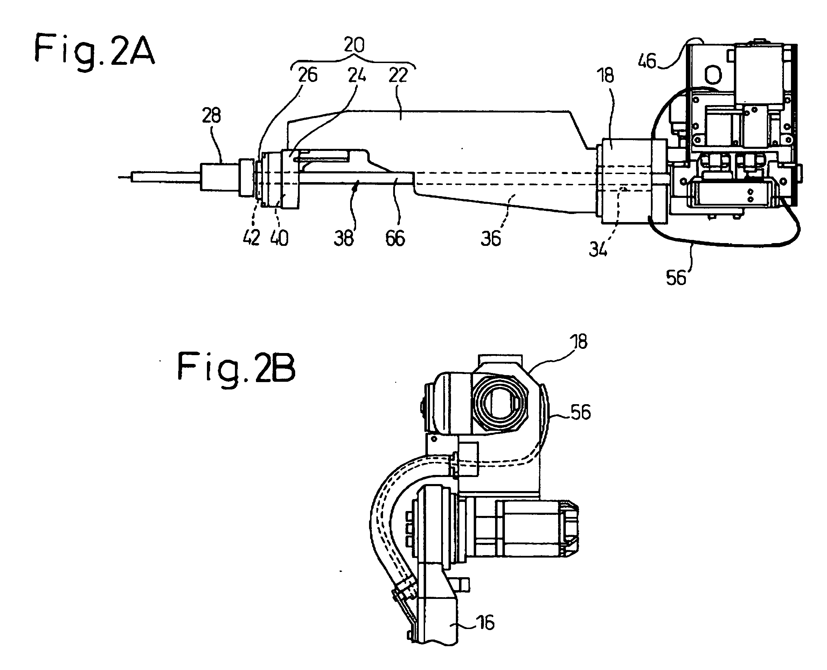

The wrist section 20, having 3-degrees of freedom and joined in an articulated manner to the forearm section 18, includes a first wrist element 22 joined to the forearm section 18 in a manner rotatable (or twistable) about the wrist first axis J4, a second wrist element 24 joined to the first wrist element 22 in a manner rotatable (or swingable) about a second axis of wrist J5 extending in a direction orthogonal to the wrist first axis J4, and a third wrist element 26 joined to the second wrist element 24 in a manner rotatable (or twistable) about a third axis of wrist J6 extending in a direction orthogonal to the wrist second axis J5 (Figs. 1 and 2A). A working tool 28 having desired function is attached to the third wrist element 26 in a suitably exchangeable manner. The robot 10 can operate, according to commands from a robot controller 30 (Fig. 3), to variously move the upper arm section 16, the forearm section 18 and the wrist section 20 by individually driving respective joints about the control axes thereof, i.e., the arm first axis J1 to the wrist third axis J6, so as to sequentially dispose the working tool 28 at designated positions and orientations and thus to perform various works.

As shown in Fig. 1, the forearm section 18 of the robot 10 includes a housing 32 for accommodating a not-shown driving mechanism (e.g., an electric motor (only a part thereof is shown), a gear train, a reduction gear and so on) for rotatably driving the wrist section 20 about the wrist first axis J4, and a through passage 34 extending parallel to (and preferably coaxially with) the wrist first axis J4 is formed inside the housing 32. On the other hand, the first wrist element 22 of the wrist section 20 is constructed from a hollow tubular body having an internal space 36 extending therethrough in a direction along the wrist first axis J4. As seen in a direction along the wrist first axis J4, the through passage 34 opens at a rear end surface 18a of the forearm section 18, arranged oppositely to or away from the internal space 36 of the first wrist element 22, and communicates with the internal space 36 of the first wrist element 22 at a front end side of the forearm section 18.

An umbilical member 38 used for supplying energy, signals, a material, etc., to the working tool 28 attached to the third wrist element 26 at a distal end of the wrist section 20, is inserted through the through passage 34 of the forearm section 18. The umbilical member 38 inserted through the through passage 34 is accommodated in the internal space 36 of the first wrist element 22, and is laid in a direction along the wrist first axis J4. The second and third wrist elements 24, 26 of the wrist section 20 may preferably be constructed from hollow tubular bodies having respective internal spaces 40, 42 extending therethrough in a direction along the wrist third axis J6, in a manner similar to the first wrist element 22 (Fig. 1). In this case, the umbilical member 38, once drawn out of the internal space 36 of the first wrist element 22, is consecutively received in the internal spaces 40, 42 of the second and third wrist elements 24, 26, is laid in a direction along the wrist third axis J6, and is connected at the distal end to the working tool 28.

A tool managing and relaying unit 46, provided with a connection part 44 to which one end of the umbilical member 38 is connected, is mounted on the forearm section 18 at a location behind and close to the opening of the through passage 34 as seen in the direction of the wrist first axis J4 (Fig. 1). The tool managing and relaying unit 46 is interposed between the umbilical member 38 and control devices or supply sources of energy, materials, etc., provided outside the robot, and has a function for relaying the transfer of signals or the supply of energy, materials, etc., relative to the working tool 28.

For example, in the embodiment shown in Figs. 1 to 3, the robot 10 is configured as an arc welding robot. In this configuration, in the robot 10, a welding torch 28 as the working tool 28 is attached to the third wrist element 26 of the wrist section 20, and a wire feeding unit 46 as the tool managing and relaying unit 46 is mounted on the forearm section 18. Further, in the robot system of Fig. 3, the robot controller 30 arranged outside the robot 10 is connected to the robot 10 via a robot control cable 48, and to a welding power-supply unit 50 also arranged outside the robot 10 via a power-supply control cable 52. The welding power-supply unit 50 is connected to the wire feeding unit 46 via a power feed cable 54 and a control cable 56. Further, the wire feeding unit 46 is connected with a gas supply source 58 arranged outside the robot 10 via a gas hose 60, and with a wire supply source 62 arranged outside the robot 10 via a wire conduit 64.

The umbilical member 38 laid or provided in the robot 10 includes a power cable (not shown) for supplying welding current (or applying welding voltage) to the welding torch 28, a tube liner (not shown) for supplying a welding wire to the welding torch 28, and an air tube (not shown) for supplying assist gas to the welding torch 28. The umbilical member 38 is configured as a composite conduit in which the above-described special-purpose wirings or tubing are received inside a sheath 66 (Figs. 1, 2A). In this connection, the umbilical member 38 may contain a water-cooling tube for cooling the welding torch 28 or a signal line for monitoring an operating situation of the welding torch 28. As shown in Figs. 1 to 2B, the control cable 56 provided between the wire feeding unit 46 and the welding power-supply unit 50 is laid to extend around the forearm section 18.

In the system configuration described above, when the welding power-supply unit 50 is activated in response to a command from the robot controller 30, the wire feeding unit 46 relays the welding current (or the welding voltage), which is provided by the feed cable 54, to the power cable of the umbilical member 38, and thus supplies the welding current or voltage to the welding torch 28. At the same time, the wire feeding unit 46 is activated in response to a signal and electric power given from the welding power-supply unit 50 via the control cable 56, and operates to continuously draw out the welding wire from the wire supply source 62 and relay it to the tube liner of the umbilical member 38, and thus supply the welding wire to the welding torch 28. In this connection, the control cable 56 may also be used to send a feedback signal for a feedback control of the wire feeding unit 46 from the wire feeding unit 46 to the welding power-supply unit 50. Further, the wire feeding unit 46 relays the assist gas, which is provided by the gas supply source 58, to the air tube of the umbilical member 38, and thus supplies the assist gas to the welding torch 28. In this manner, under the commands of the robot controller 30, the robot 10 performs arc welding on a workpiece (not shown) according to a predetermined welding condition, while being accompanied by the various movements of the robot 10 or, more specifically, the welding torch 28.

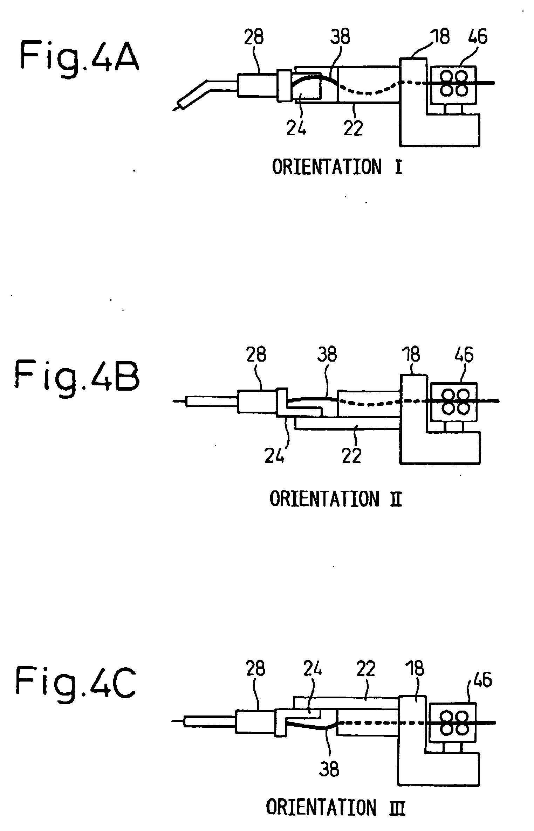

Figs. 4A to 5C illustrate an example of the behavior or motion of the umbilical member 38 shifted due to the movement of the wrist section 20 in the robot 10 configured as described above. In a case where the first wrist element 22 and the second wrist element 24 are stretched straight, the length of the umbilical member 38 is previously set so that the umbilical member 38 laid between the working tool (the welding torch) 28 and the tool managing and relaying unit (the wire feeding unit) 46 somewhat slackens, in a reference orientation I where the control axes of the axes J4 to J6 (Fig. 1) are positioned at predetermined rotational positions (Fig. 4A). In an orientation II where, for example, the first wrist element 22 rotates from the reference orientation I in one direction by 90 degrees relative to the forearm section 18 (Fig. 4B), the umbilical member 38 is twisted due to the rotation and the slack of the umbilical member is absorbed accordingly. Similarly, in an orientation III where the first wrist element 22 rotates from the reference orientation I in the reverse direction by 90 degrees (Fig. 4C), the umbilical member is reversely twisted due to the rotation and the slack of the umbilical member is absorbed accordingly. Therefore, during such a movement of the wrist section 20, the shifting behavior or motion of the umbilical member 38 is relatively small.

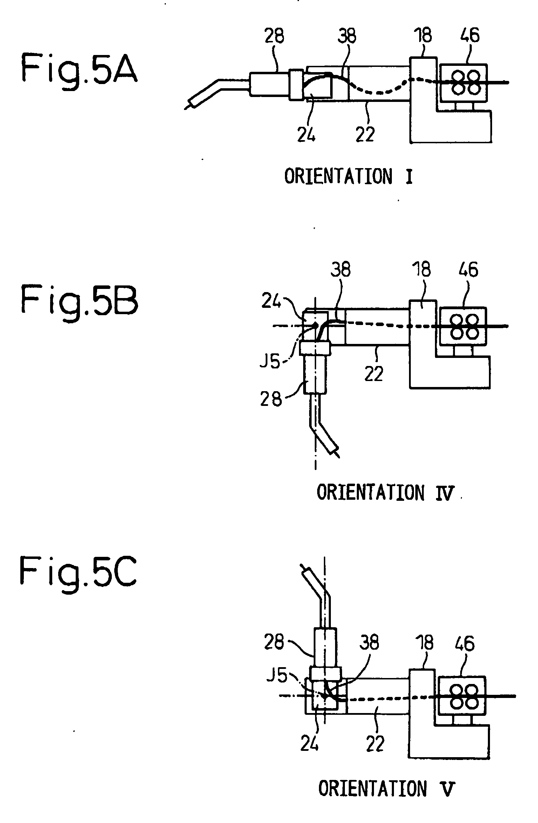

On the other hand, as shown in Figs. 5A to 5C, in an orientation IV where the second wrist element 24 rotates from the reference orientation I described above (Fig. 5A) in one direction by 90 degrees relative to the first wrist element 22 (Fig. 5B), the umbilical member 38 bends due to the rotation and the slack of the umbilical member is absorbed accordingly. Similarly, in an orientation V where the second wrist element 24 rotates from the reference orientation I in the reverse direction by 90 degrees (Fig. 5C), the umbilical member 38 bends due to the rotation and the slack of the umbilical member is absorbed accordingly. During such a movement of the wrist section 20, the umbilical member 38 bends at a point near the wrist second axis J5, and therefore, the shifting behavior or motion of the umbilical member 38 is relatively large. Although not shown, when the third wrist element 26 rotates from the reference orientation I described above (Fig. 5A) relative to the second wrist element 24, the shifting motion of the umbilical member 38 is similar to that shown in Figs. 4A to 4C.

In the robot 10, in addition to the movement of the wrist section 20 described above, the upper arm section 16 and the forearm section 18 move variously. Therefore, in order to prevent interference between the tool managing and relaying unit (the wire feeding unit) 46 and structures surrounding the robot 10 during the movement of the arm and reduce an influence of an inertia of the tool managing and relaying unit 46 on the movement of the arm, a configuration (Fig. 1) is adopted, wherein a gap defined between the tool managing and relaying unit 46 and the forearm section 18 is reduced as much as possible and, in this state, the tool managing and relaying unit 46 is disposed in the neighborhood of a joint (or the arm third axis J3). In addition, in the robot 10, the characteristic configuration is adopted as follows, in order to solve the problems in the conventional arts in relation to a task for replacing the umbilical member previously described.

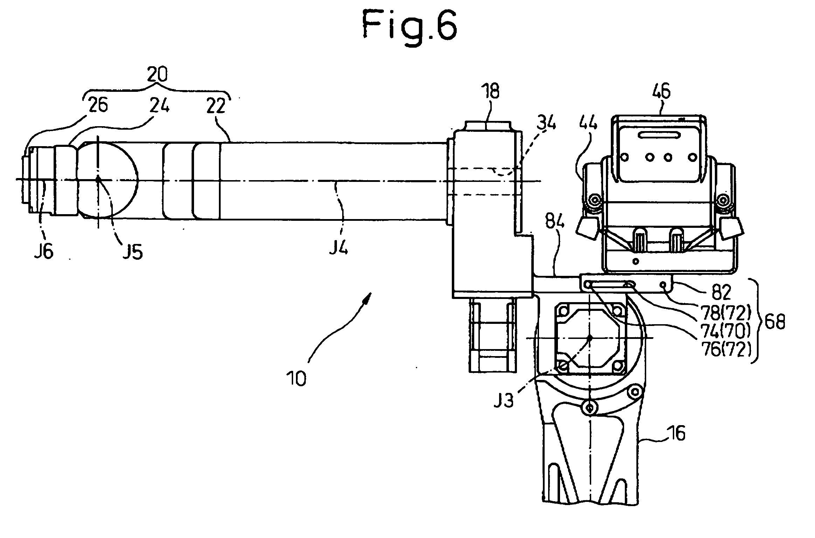

As shown in Figs. 1 and 6, the robot 10 includes a mount mechanism 68 that carries the tool managing and relaying unit 46 in a manner movable between a first position (a position shown in Fig. 1) where the connection part 44 thereof is disposed adjacent to the rear end opening of the through passage 34 of the forearm section 18 and a second position (a position shown in Fig. 6) where the connection part 44 is spaced from the rear end opening of the through passage 34. The mount mechanism 68 is configured to secure the tool managing and relaying unit 46 to the forearm section 18 in a releasable manner at the first position, and carry the tool managing and relaying unit 46 on the forearm section 18 in a stationary manner at the second position.

In the robot 10 configured as described above, the tool managing and relaying unit 46 is secured at the first position during the time when the arm is moving, so that it is possible to prevent interference between the tool managing and relaying unit 46 and the structures surrounding the robot 10 from occurring and also to reduce the influence of the inertia of the tool managing and relaying unit 46 on the movement of the arm. When the umbilical member 38 should be replaced, the tool managing and relaying unit 46 is moved to the second position, so that it is possible to ensure a space between the tool managing and relaying unit 46 and the forearm section 18 sufficient to allow an operator to smoothly remove the umbilical member 38 from the connection part 44. Therefore, in the robot 10, it is possible to easily replace the umbilical member 38, which may be degraded or damaged due to the bending or twisting caused during repeated arm movement, at desired times or periodically, and thus properly and safely manage the robot.

In particular, the robot 10 is configured such that the through passage 34 of the forearm section 18 is disposed parallel to (or preferably, coaxially with) the wrist first axis J4 and a part of the wrist section 20 includes at least partially the internal space 36 communicating with the through passage 34 and receiving the umbilical member 38, and therefore, it is possible to reduce the length of the umbilical member 38 as much as possible and thus to effectively inhibit the shifting behavior or motion of the umbilical member 38 inside the forearm section 18 and the wrist section 20 accompanying with the movement of the arm. Moreover, a center of gravity of the tool managing and relaying unit 46 can be disposed on the wrist first axis J4, and therefore, it is possible to maintain the desired balance of the arm structure and thus reliably eliminate the influence on the movement of the arm caused by the inertia of the tool managing and relaying unit 46 or interference thereof with the peripheral devices of the robot. Accordingly, the robot 10 possesses excellent reliability such as preventing interference between the tool managing and relaying unit 46 and the structures surrounding the robot from occurring during the movement of the arm, reducing the influence of the inertia of the tool managing and relaying unit 46 on the movement of the arm, and also allowing the umbilical member 38 to be smoothly replaced and the safety management of the robot 10 to be properly performed.

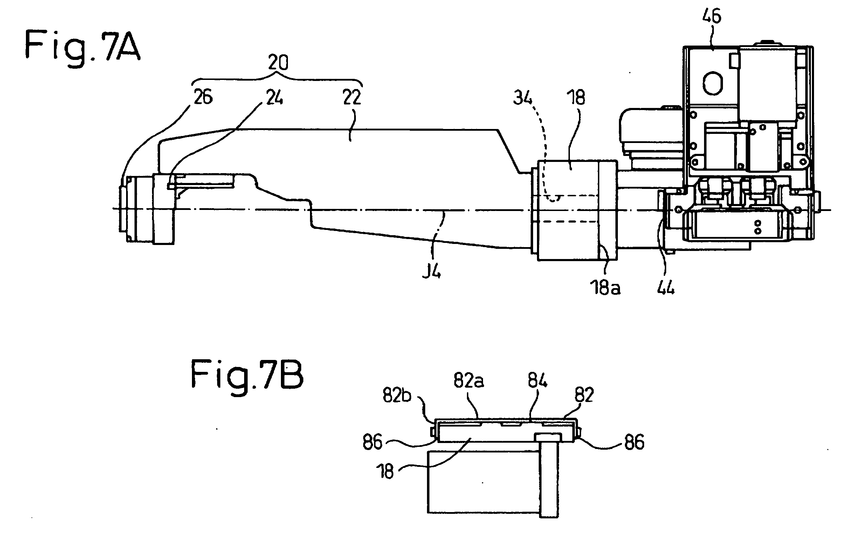

An example of a specific configuration of the mount mechanism 68 will be described below. As shown in Figs. 1, 2A, 6 and 7A, the mount mechanism 68 includes a guide section 70 that guides the tool managing and relaying unit 46 between the first position (Figs. 1, 2A) and the second position (Figs. 6, 7A), and a securing section 72 that cooperates with the guide section 70 to secure the tool managing and relaying unit 46 in a releasable manner at the first position. In this configuration, due to the function of the guide section 70, any person can easily and accurately move the tool managing and relaying unit 46 on the forearm 18 between the first position and the second position, and therefore, it is possible to reduce the time required for replacing the umbilical member 38. Further, due to the function of the securing section 72, the tool managing and relaying unit 46 can always be accurately positioned and secured at the first position on the forearm section 18, and therefore, it is possible to improve the reproducibility of the operation of the robot 10 including the shifting motion of the umbilical member 38 and thus to improve the precision of programming by simulation.

In the configuration described above, the guide section 70 may include an oblong hole 74 that is provided in the tool managing and relaying unit 46 and is provided with a major axis arranged parallel to the moving direction of the tool managing and relaying unit 46 between the first position (Fig. 1) and the second position (Fig. 6). In this configuration, a protrusion (not shown) capable of slidingly engaging with the oblong hole 74 may be formed on the forearm section 18 in such a manner that positions where the protrusion is engaged with longitudinally opposite ends of the oblong hole 74 are defined as the first and second positions of the tool managing and relaying unit 46, so that it is possible to easily and accurately locate the tool managing and relaying unit 46 at the first and second positions. Moreover, the distance between the first and second positions can be accurately defined by the size of the oblong hole 74. The distance between the first and second positions defined by the size of the oblong hole 74 may preferably be, for example, 50 mm or more, but can be optimally defined depending on the way that the umbilical member 38 is removed. In the state where the tool managing and relaying unit 46 is disposed at the second position, it is important that the protrusion is engaged with the end edge of the oblong hole 74 so as to ensure the stationary support of the tool managing and relaying unit 46, and further that the weight of the tool managing and relaying unit 46 can be stably supported by the engagement between the oblong hole 74 and the protrusion.

In the configuration described above, the securing section 72 may include a bolt 76 that is inserted through the oblong hole 74 in a slidingly engagable manner and that is screwed with an internal thread (not shown) formed at a predetermined location on the forearm section 18. In this case, when the tool managing and relaying unit 46 is disposed at the first position, the bolt 76 can be firmly tightened with the internal thread of the forearm section 18, and thereby the tool managing and relaying unit 46 can be stably and firmly secured at the first position. When it is required that the tool managing and relaying unit 46 be moved from the first position to the second position, the bolt 76 can be appropriately loosened. In this connection, if the bolt 76 is maintained to be partially screwed with the internal thread of the forearm section 18, the bolt 76 can act as the protrusion that is slidably engaged with the oblong hole 74, so as to accurately guide the tool managing and relaying unit 46 between the first and second positions.

In the configuration described above, the securing section 72 may also include a through hole 78 (Fig. 6) that is provided in the tool managing and relaying unit 46 separately from the oblong hole 74, and a second bolt 80 (Fig. 1) that is inserted through the through hole 78 and screwed with an internal thread (not shown) formed at a predetermined location on the forearm section 18. In this configuration, in addition to the bolt 76 inserted through the oblong hole 74, the bolt 80 inserted through the through hole 78 can be firmly tightened with the internal thread of the forearm section 18, and thereby the tool managing and relaying unit 46 can be more stably and firmly secured at the first position. When it is required that the tool managing and relaying unit 46 be moved from the first position to the second position, the bolt 80 can be removed. In this case, regardless of the positional correlation between the oblong hole 74 and the bolt 76, the first position can be defined by the position of the through hole 78 on the tool managing and relaying unit 46 and the position of the corresponding internal thread on the forearm section 18. Further, in place of the bolt 76 inserted through the oblong hole 74, the above-described simple protrusion may be adopted.

As will be understood from the above description, using the oblong hole 74 and the bolt 76 in the mounting mechanism 68 makes it possible for any person to easily and accurately move the tool managing and relaying unit 46 between the first and second positions and secure the tool managing and relaying unit 46 at either one of the first and second positions, on the forearm section 18, regardless of the orientation of the forearm section 18 of the robot 10 in the halt state of the robot 10. In this connection, in order to smoothly perform an operator's work such as tightening of the bolt 76, it is desirable that any other components of the robot (e.g., a drive mechanism of a joint) is not located around (especially, at a lateral side of) the tool managing and relaying unit 46 on the forearm section 18. In particular, in the configuration of the illustrated embodiment in which the wire feeding unit 46 constitutes the tool managing and relaying unit 46, for the sake of a replacement or maintenance work of a consumable part (e.g., a feed roller) of the wire feeding unit 46, it is advantageous to ensure a sufficient space around the tool managing and relaying unit 46 on the forearm section 18.

The mount mechanism 68 may further includes an attachment member 82 that is detachably attached to the tool managing and relaying unit 46. The attachment member 82 is interposed between the tool managing and relaying unit 46 and the forearm section 18 and is fitted to the forearm section 18, in such a manner that the attachment member 82 can move integrally with the tool managing and relaying unit 46 between the first position and the second position. In this configuration, even when the type of the tool managing and relaying unit 46 is changed so as to correspond to a change in a task performed by the robot 10 (e.g., in a case where the wire feeding unit 46 is changed to another unit such as a hand controller as described later), it is possible, only by reattaching the attachment member 82 to another tool managing and relaying unit 46 as changed, to properly mount the other tool managing and relaying unit 46 on the forearm section 18, without modifying the configuration of the mount mechanism 68. Further, if several types of attachment members 82 having different shapes and dimensions are prepared, it is possible, even for a tool managing and relaying unit 46 having a different shape in an outer surface portion resting on the forearm section 18, to properly mount the tool managing and relaying unit 46 on the forearm section 18, by selectively using any one of attachment members 82 having a corresponding shape.

As shown in Fig. 6, the attachment member 82 can be slidably supported on a top surface 84 of the forearm section 18, which is defined at a rear side of the through passage 34 as seen in the direction of the wrist first axis J4. The illustrated top surface 84 is a flat surface parallel to both the arm third axis J3 and the wrist first axis J4. Correspondingly, the mount mechanism 68 carries the tool managing and relaying unit 46 in a manner linearly movable in the direction parallel to the wrist first axis J4 between the first position (Fig. 1) and the second position (Fig. 6). According to this configuration, it is possible to ensure a gap having a maximum dimension between the rear end opening of the through passage 34 of the forearm section 18 and the tool managing and relaying unit 46, by a minimum moving distance of the tool managing and relaying unit 46. In this connection, in order to smoothly move the tool managing and relaying unit 46 from the first position to the second position without obstruction, it is required that the umbilical member 38 be previously provided with slack corresponding to the required moving distance during the time when the tool managing and relaying unit 46 is disposed at the first position, and the above-described configuration makes it possible to reduce initial slack as much as possible. From this point of view, when the tool managing and relaying unit 46 is moved from the first position to the second position, it is advantageous that the wrist section 20 is disposed at the reference orientation I shown in Figs. 4A and 5A.

As shown in Fig. 7B, the attachment member 82 may include a flat major portion 82a that extends parallel to the top surface 84 of the forearm section 18, and a pair of side portions 82b that extend orthogonally to the major portion 82a along a pair of opposed edges of the major portion 82a and slidably contact with both side surfaces 86 of the forearm section 18. In this configuration, the attachment member 82 is slidably engaged with the forearm section 18 and thereby accurately guided between the first and second positions. If the oblong hole 74 or the through hole 78, described above, is formed in one of the side portions 82b of the attachment member 82, and correspondingly, the internal thread, with which the bolt 76, 80 is screwed, is formed in one of the side surfaces 86 of the forearm section 18, an operator can very easily manipulate the bolt by his hand when moving the tool managing and relaying unit 46. Moreover, if oblong holes 74 or through holes 78 are formed in both of the pair of side portions 82b of the attachment member 82, and correspondingly, internal threads, with which bolts 76, 80 are screwed, are formed in the both side surfaces of the forearm section 18, it is possible to further stabilize the guiding function of the guide section 70 on the tool managing and relaying unit 46 and further enhance the securing function of the securing section 72 thereon. The above-described partial modifications of guide section 70 and securing section 72 may also be adopted in the case where the attachment member 82 is not used and the guide section 70 and the securing section 72 are formed directly in the forearm section 18 and the tool managing and relaying unit 46.

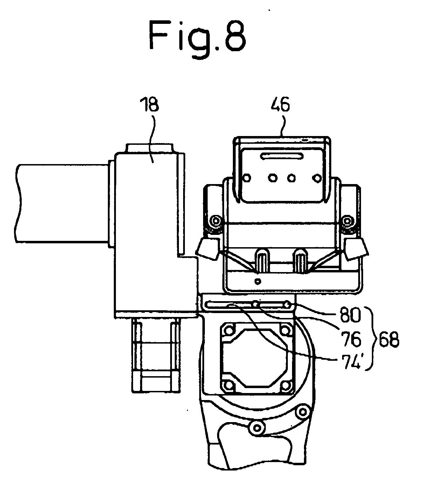

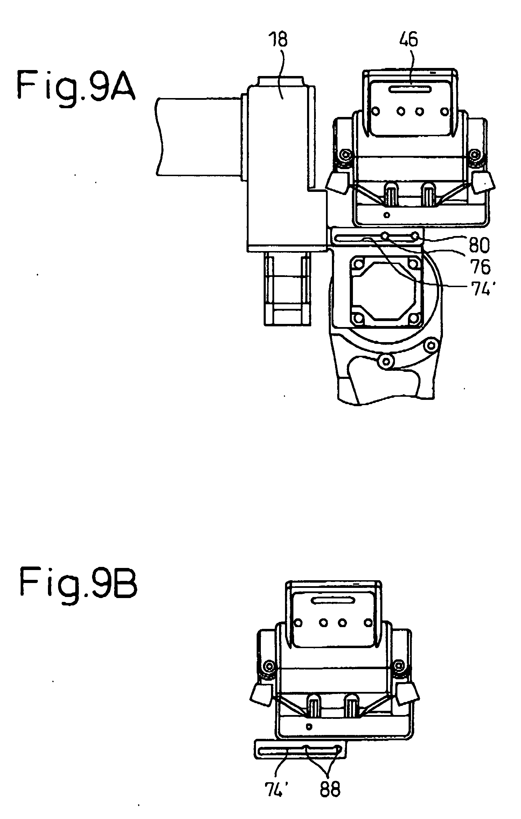

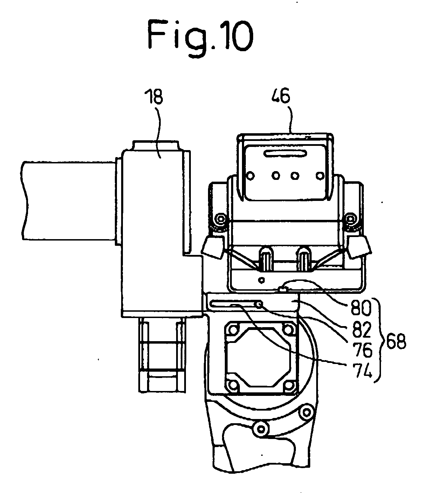

Figs. 8 to 10 show various modifications of the mount mechanism 68 described above. In the modification shown in Fig. 8, two bolts 76 and 80 are inserted through an oblong hole 74' having a further elongated major axis in a slidingly engagable manner and screwed with corresponding internal threads of the forearm section 18. In this case, either one of the bolts 76, 80 may be replaced by a simple protrusion. Further, in the modification of Figs. 9A and 9B, a pair of notches 88, with which the individual bolts 76, 80 can be engaged, are formed at predetermined positions along a peripheral edge of the oblong hole 74'. In this configuration, when a position where the bolts 76, 80 are simultaneously engaged with the corresponding notches 88 is defined as the first position, it is possible to stabilize the positioning function of the mount mechanism 68. Still further, in the modification of Fig. 10, the through hole 78 shown in Fig. 6 is formed in the major portion 82a (Fig. 7B) of the attachment member 82, and the bolt 80 is screwed with an internal thread formed at a predetermined position on the top surface 84 (Fig. 7B) of the forearm section 18.

In either of the configurations described above, the head of a bolt 76, 80 may be enlarged and knurled so that the operator can manipulate the bolt without using any tools, or a stud bolt may be used as the bolt 76, 80 so as to improve positioning accuracy with respect to the tool managing and relaying unit 46. Further, the oblong hole 74 or the through hole 78 may be formed in the forearm section 18 in place of the tool managing and relaying unit 46. In this case, an internal thread, with which the bolt 76, 80 is screwed, can be formed in the tool managing and relaying unit 46 that does not have the oblong hole.

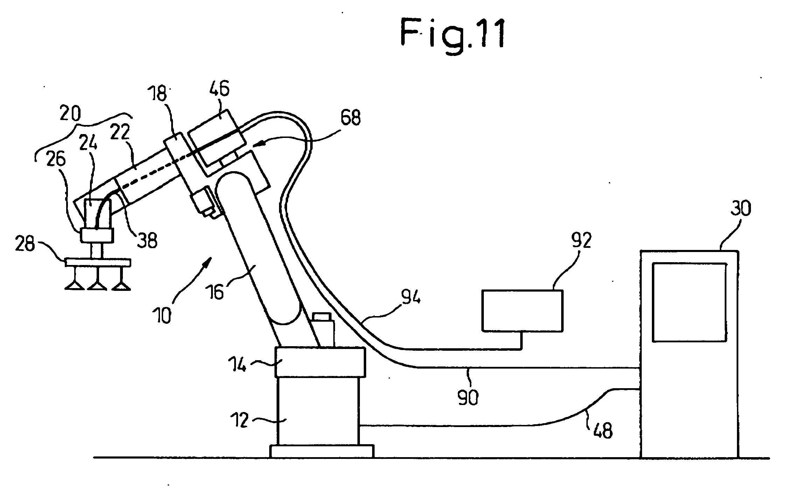

Fig. 11 schematically shows a second example of an entire configuration of the robot system including the robot 10. In this example, the robot 10 is configured as a handling robot. In this configuration, in the robot 10, a hand 28 as the working tool 28 is attached to the third wrist element 26 of the wrist section 20, and a hand controller (e.g., an electromagnetic valve box) 46 as the tool managing and relaying unit 46 is mounted on the forearm section 18. Further, the robot controller 30 arranged outside the robot 10 is connected to the robot 10 via the robot control cable 48 and, on the other hand, to the hand controller 46 via a hand control cable 90. Further, the hand controller 46 is connected with a hydraulic air (or vacuum) supply source 92 arranged outside the robot 10 via an air pipe 94.

The umbilical member 38 laid or provided in the robot 10 includes an air tube (not shown) for supplying hydraulic air (or vacuum) to the hand 28, and a signal line (not shown) for sending control signals to the hand 28. The umbilical member 38 is configured as a composite conduit in which the above-described special-purpose wirings or tubing are received inside a sheath 66 (Figs. 1, 2A). In this connection, the hand 28 may include an air driven gripper or a vacuum suction cup.

In the system configuration described above, when a command from the robot controller 30 is given via the hand control cable 90, the hand controller 46 actuates, for example, an electromagnetic valve contained therein, and relays the hydraulic air (or vacuum), which is given via the air pipe 94, to the air tube of the umbilical member 38, and thus supplies the hydraulic air (or vacuum) to the hand 28. In this connection, the hand control cable 90 and the signal line of umbilical member 38 may also be used to send a feedback signal for checking a proper gripping (or suction) by the hand 28 to the robot controller 30. In this manner, under the commands of the robot controller 30, the robot 10 performs a designated handling operation for a workpiece (not shown), while accompanying with the various movements of the robot 10 or, more specifically, the hand 28.

Also in the above-described system configuration, the handling robot 10, provided with the mount mechanism 68 described above, possesses excellent reliability such as to prevent the interference between the hand controller 46 and the structures surrounding the robot from occurring during the movement of the arm, to reduce the influence of the inertia of the hand controller 46 on the movement of the arm, and also to allow the umbilical member 38 to be smoothly replaced and the safety management of the robot 10 to be properly performed. Thus, even if the robot system is configured differently (i.e., the robot operates differently), the present invention can solve common problems by the corresponding technique. It should be noted that, in the above-described two examples of system configurations, the umbilical member 38 laid or provided in the robot 10 is configured as the composite conduit in which a plurality of wirings or tubing are bundled, but the present invention is not limited to the above configuration and may also be effectively applied to a configuration in which the umbilical member 38 consists of a single wiring or tubing.

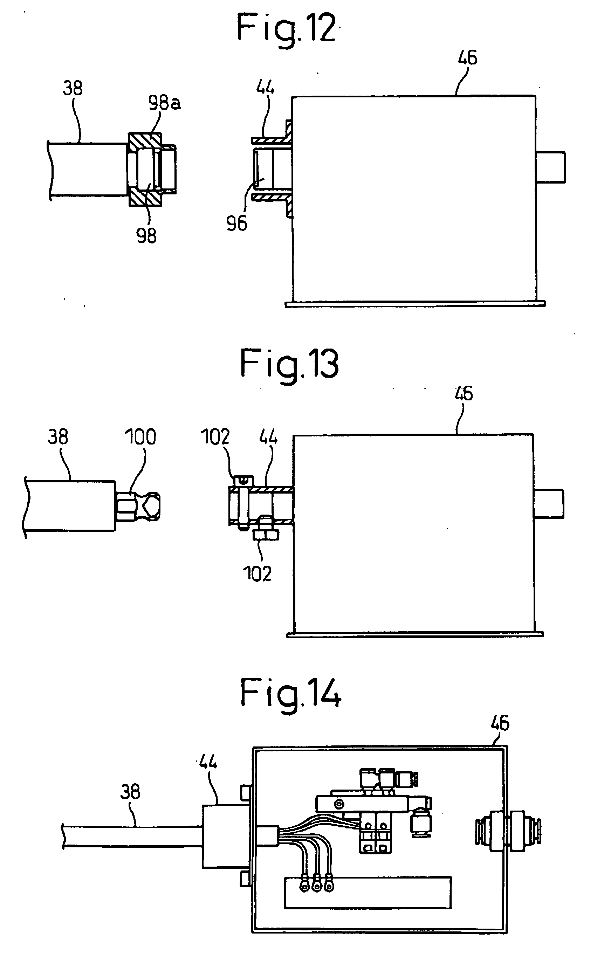

Figs. 12 to 14 show several examples of specific configurations of the connection part 44 of the tool managing and relaying unit 46, in the robot 10 configured as described above. The connection part 44 of Fig. 12 has a connector-type coupling structure in which a male connector 98 provided at the end of the umbilical member 38 is detachably coupled to a female connector 96 provided in the connection part 44. The connection part 44 of this type may be preferably used in the case where a plurality of wirings or tubing for a welding cable, assist gas, etc., are bound together and detachably connected to the connection part 44, as in the arc welding robot described above. In this configuration, when the umbilical member 38 is attached to or detached from the tool managing and relaying unit 46, it is required that, for example, a coupling screw 98a for the male connector 98 is manually manipulated. Therefore, it is effective to move the tool managing and relaying unit 46 to the second position when the umbilical member 38 is replaced, due to the above-described function of the mount mechanism 68.

The connection part 44 of Fig. 13 has a pin-type coupling structure in which a pin 100 provided at the end of the umbilical member 38 is detachably coupled to the connection part 44 having a tubular shape. The connection part 44 of this type may be preferably used in the case where, for example, only a tube for a welding cable is detachably connected to the connection part 44 in the arc welding robot described above. In this configuration, when the umbilical member 38 is attached to or detached from the tool managing and relaying unit 46, it is required that, for example, a set screw 102 provided in the connection part 44 is manually manipulated. Therefore, it is effective to move the tool managing and relaying unit 46 to the second position when the umbilical member 38 is replaced, due to the above-described function of the mount mechanism 68.

The connection part 44 of Fig. 14 has a grommet-type coupling structure in which a grommet (not shown) provided at the end of the umbilical member 38 is detachably coupled to the connection part 44 having a tubular shape. The connection part 44 of this type may be preferably used in the case where, for example, an air tube or a signal line is detachably connected to the connection part 44 in the handling robot described above. In this configuration, when the umbilical member 38 is attached to or detached from the tool managing and relaying unit 46, it is required that wirings connected to terminals inside the tool managing and relaying unit (the hand controller) 46 are first detached and the grommet coupled to the connection part 44 is then loosened so as to draw the umbilical member 38 out of the connection part 44. Therefore, it is effective to move the tool managing and relaying unit 46 to the second position when the umbilical member 38 is replaced, due to the above-described function of the mount mechanism 68.

In this connection, in the connection part 44 having any of the above-described configurations, it is effective to reduce a gap between the forearm section 18 and the tool managing and relaying unit 46 to the extent that the connection part 44 is received inside the through passage 34 of the forearm section 18, during the time when the tool managing and relaying unit 46 is disposed at the first position (i.e., during the time when the robot 10 performs various operations), in order to reduce any influence on the movement of the arm as much as possible.

While the invention has been described with reference to specific preferred embodiments, it will be understood, by those skilled in the art, that various changes and modifications may be made thereto without departing from the scope of the following claims.

## Claims

1. A robot comprising a forearm section (18) provided with a through passage (34), a wrist section (20) articulated on said forearm section, an umbilical member (38) inserted through said through passage of said forearm section and provided along said wrist section, and a tool managing and relaying unit (46) mounted on said forearm section close to said through passage and provided with a connection part (44), said umbilical member being connected to said connection part, **characterized in that** said robot comprises:
a mount mechanism (68) carrying said tool managing and relaying unit in a manner movable between a first position where said connection part is disposed adjacent to an opening of said through passage and a second position where said connection part is spaced from said opening of said through passage, and securing said tool managing and relaying unit to said forearm section in a releasable manner at said first position.

2. A robot as set forth in claim 1, wherein said mount mechanism comprises a guide section (70) guiding said tool managing and relaying unit between said first position and said second position, and a securing section (72) cooperating with said guide section to releasably secure said tool managing and relaying unit at said first position.

3. A robot as set forth in claim 2, wherein said guide section includes an oblong hole (74; 74') provided in either one of said forearm section and said tool managing and relaying unit, a major axis of said oblong hole being parallel to a moving direction of said tool managing and relaying unit between said first position and said second position.

4. A robot as set forth in claim 3, wherein said securing section includes a bolt (76; 80) inserted through said oblong hole in a slidingly engagable manner and screwed with either one of said forearm section and said tool managing and relaying unit, which is not provided with said oblong hole.

5. A robot as set forth in claim 3, wherein said securing section includes a through hole (78) provided, separately from said oblong hole, in either one of said forearm section and said tool managing and relaying unit, and a bolt (80) inserted through said through hole and screwed with either one of said forearm section and said tool managing and relaying unit, which is not provided with said through hole.

6. A robot as set forth in claim 1, wherein said mount mechanism comprises an attachment member (82) detachably attached to said tool managing and relaying unit; and wherein said attachment member is fitted to said forearm section movably between said first position and said second position.

7. A robot as set forth in claim 1, wherein, when said tool managing and relaying unit is disposed at said first position, said connection part is received inside said through passage of said forearm section.

8. A robot as set forth in claim 1, wherein said wrist section comprises a first wrist element (22) joined to said forearm section and rotatable about a first axis (J4), a second wrist element (24) joined to said first wrist element and rotatable about a second axis (J5) extending orthogonally to said first axis, and a third wrist element (26) joined to said second wrist element and rotatable about a third axis (J6) extending orthogonally to said second axis; and wherein a working tool (28), to which said umbilical member is connected, is attached to said third wrist element.

9. A robot as set forth in claim 8, wherein said through passage of said forearm section is disposed coaxially with said first axis; and wherein said wrist section is provided at least partially with an internal space (36, 40, 42) communicating with said through passage and receiving said umbilical member.

10. A robot as set forth in claim 8, wherein said mount mechanism carries said tool managing and relaying unit in a manner linearly movable between said first position and said second position in a direction parallel to said first axis.
